(19) Europäisches Patentamt

European Patent Office

Office européen des brevets

(11) **EP 1 067 395 A1**

(12) **EUROPEAN PATENT APPLICATION**
published in accordance with Art. 158(3) EPC

(43) Date of publication:
**10.01.2001 Bulletin 2001/02**

(51) Int. Cl.[7]: **G01S 5/02**, H04B 7/185

(21) Application number: **98966992.4**

(86) International application number:
**PCT/RU98/00422**

(22) Date of filing: **21.12.1998**

(87) International publication number:
**WO 00/37963 (29.06.2000 Gazette 2000/26)**

(84) Designated Contracting States:
**DE FR GB SE**

(71) Applicant:
**Samsung Electronics Co., Ltd.
Suwon-city, Gyungki-do (KR)**

(72) Inventors:
- **ROG, Andrei Leonidovich
  Moscow, 107143 (RU)**
- **IVANOV, Vladimir Nikolaevich
  St.Petersburg, 195297 (RU)**
- **SOSHIN, Mikhail Petrovich
  St.Petersburg, 194295 (RU)**
- **MALASHIN, Viktor Ivanovich
  St.Petersburg, 195273 (RU)**

- **POVERENNY, Denis Georgievich
  St.Petersburg, 195297 (RU)**
- **SHEBSHAEVICH, Boris Valentinovich
  St.Petersburg, 190121 (RU)**
- **SILIN, Mikhail Jurievich
  Moscow, 105094 (RU)**
- **FEDOTOV, Boris Dmitrievich
  St.Petersburg, 195213 (RU)**

(74) Representative:
**Neill, Alastair William et al
Appleyard
Lees & Co.
15 Clare Road
Halifax West Yorkshire HX1 2HY (GB)**

(54) **DIGITAL CORRELATOR**

(57) The invention relates to the field of radio navigation and, more specifically, the invention relates to digital correlators of receivers of pseudonoise signals of satellite radio navigation systems GPS and GLONASS performing reception and a correlation processing of signals of the C/A codes in L1/F1 frequency range. What is claimed is a digital correlator of such a receiver providing a reliable frequency separation of the signals of the GLONASS system due to implementation of a special approximation of the sine and cosine of the intermediate frequency which provides a level of spurious harmonic components required for a reliable frequency division of the GLONASS signals and conceits of simple units.

EP 1 067 395 A1

**Description**

*Technical Field*

The invention relates to the field of radio navigation and, more specifically, the invention relates to digital correlators of receivers used to receive pseudonoise (noise-like) signals of the satellite radio navigation systems (SRNS) GPS (USA) and GLONASS (Russia) performing the reception and correlation processing of signals of the C/A codes of these systems in the L1/F1 frequency range.

*Prior engineering level*

The receivers of the SRNS GLONASS pseudonoise signals (cf. "Global Navigation Satellite System - GLONASS. The interface control document. The KNITS VKS Institute, Russia", 1995) [1] and GPS (cf. "Global Position System. Standard Positioning Service. Signal Specification". USA, 1993.) [2] are now widely used for determining the coordinates (latitude, longitude, height) and velocity of objects and time. The fundamental difference between the SRNS GPS and the GLONASS consists in a usage of different, though adjacent frequency ranges, use of different pseudonoise modulating codes and in the use, respectively, of the code and frequency division of signals of various satellites in the system. In the SRNS GPS the satellites transmit signals modulated by different pseudonoise codes on the same carrier frequency of 1575.42 MHz (for the L1 frequency range). In the SRNS GLONASS the satellites radiate signals modulated by the same pseudonoise code on different carrier letter frequencies adjacent to the GPS signals in the F1 frequency range. The rated values of the letter frequencies of the GLONASS signals are formed using the rule:

$$f_{,i} = f_{,0} + i \times \Delta f,$$

where:

$f_{,i}$ - the rated values of the letter frequencies
$f_{,0}$ is the zero letter frequency
i is the letter number
$\Delta f$ is the interval between the letter frequencies

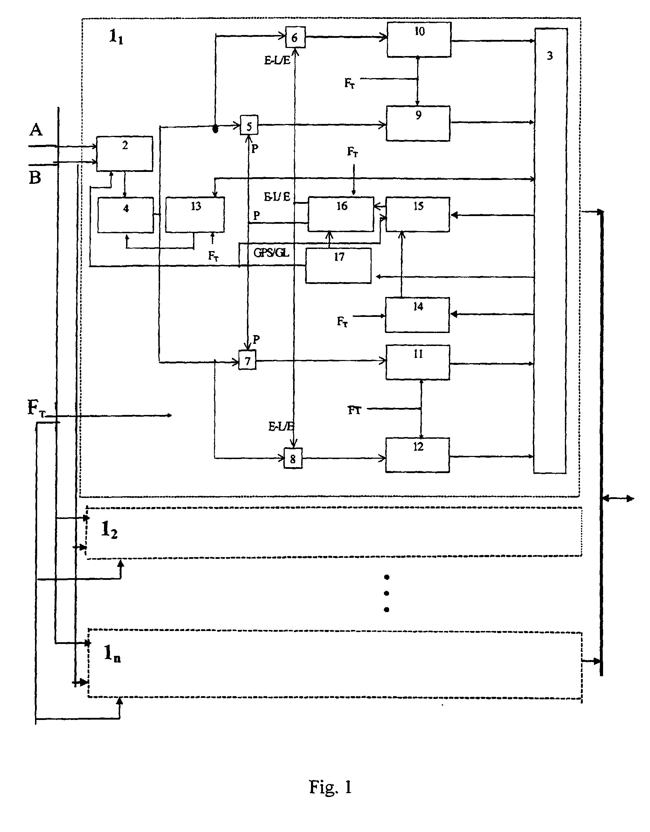

For the frequencies in a range $F_1$: $f_{,0}$ = 1602 MHz, $\Delta f$ = 0.5625 MHz.
Despite of the distinctions between the SRNS GPS and GLONASS systems, their closeness by the designation, ballistic structure of the orbital group of satellites and the frequency range used allows one to set and solve the problems associated with the creation of integrated receivers capable of receiving the signals of both these systems. The result achieved consists in a higher reliability, authenticity and accuracy in fixing the position of the object, in particular, due to a possibility of selection of working constellations of satellites with the best values of the geometrical factors (cf. "Network Satellite Radio Navigation Systems", V.S. Shebshaevich, P.P. Dmitriev, N.V. Ivantsevich et. al. Moscow, "Radio i Svyaz" Publishers, 1993, page 160) [3]. In so doing it is necessary to solve the problem of development of tools used for reception and correlation processing of the SRNS GPS and GLONASS signals in a single integrated receiver for the purpose of its simplification and minimization. Thus, stemming from the specific features of the SRNS GLONASS signals, an essential issue is a provision in the integrated receiver of a good frequency division of the SRNS GLONASS signals at a minimum amount of the equipment, which is an objective of the present invention. The typical integrated receiver for receiving the SRNS GPS and GLONASS signals (cf. Riley S., Howard N., Aardoom E., Daly P., Silvestrin P. "A Combined GPS/GLONASS High Precision Receiver for Space Applications ") Proc. of ION GPS-95, Palm Springs, CA, US, September 12-15, 1995, pp.835-844) [4] comprises an antenna, a radio-frequency converter, a multichannel digital correlator, and a processor. The radio-frequency converter of the integrated receiver has separate intermediate-frequency channels for the signals in each of these systems. The antenna and radio-frequency converter provide SRNS signal reception, frequency selection, amplification, down conversion into an intermediate frequency (IF) and conversion into a digital form with the help of analog-to-digital (A-D) converters. The IF channel of the radio-frequency converter of the integrated receiver for the SRNS GLONASS signals has a wide frequency band providing simultaneous transmission at its output of signals of all the letter frequencies of this system. Thus, the signal at the IF channel output for the SRNS GLONASS represents a sum of signals of the letter frequencies of all visible satellites, fluctuation noise and different kind of interference received together with the useful signals thereby implying definite requirements to the quality of the frequency division of the signals having different letters during their subsequent digital processing in the digital correlator. The SRNS GLONASS and GPS digital signals from the outputs of the A-D converter of the radio-frequency converter are applied to the input of the multichannel digital correlator, where they are digitized with time and are allocated in the digital correlator channels. The block diagram of a typical digital correlator of the integrated receiver to receive the SRNS GPS and GLONASS signals [4], accepted as a prior art is shown in Fig. 1.

The digital correlator of the SRNS signal receiver taken as a prior art, comprises (Fig. 1) N channels 1 (11, 12... 1N). The first and second signal inputs of the channels 1, the clock inputs (inputs of the clock signals $F_T$), as well as the inputs-outputs of all N channels 1 (11, 12... 1N), are interconnected and form, respectively, a first signal input, a second signal input, a clock input and an input-output of the digital correlator. Each of the channels 1 of the digital correlator comprises a switchboard 2 to switch the SRNS GPS and GLONASS signals, a data exchange unit 3, a digital mixer 4, correlators (digital demodulators) 5, 6, 7 and 8, storage units 9, 10, 11 and 12, a digital controlled carrier generator 13, a digital controlled code generator 14, a C/A code generator 15 (GPS and GLONASS), a programmed delay line 16, and a control register 17. The first and second signal inputs of the switchboard 2 (the inputs of the digital SRNS GPC and GLONASS signals) will form, respectively, first and second signal inputs of the channel 1. The data input-output of the unit 3 form an input-output of the channel 1. The clock inputs of the storage units 9-12, generators 13, 14, and programmed delay lines 16 form a clock input of the channel 1. The data exchange unit 3 is connected through appropriate input-output buses to the processor of the SRNS signal receiver (the processor is not shown in Fig. 1), as well as to the storage units 9-12, control input of the digital controlled carrier generator 13, control input of the control register 17, control input of the digital controlled code generator 14, and the first input of the C/A code generator 15. The second input of the C/A code generator 15 is connected to the output of the digital controlled code generator 14. The control input of the switchboard 2 switching the SRNS signals is connected to one of the outputs of the control register 17. The other outputs of the control register 17 are connected to the respective inputs of the programmed delay line 16 and the C/A code generator. The output of the switchboard 2 is connected to the signal input of the digital mixer 4, whose reference input is connected to the output of the digital controlled carrier generator 13. The first and second outputs of the digital mixer 4 are connected to the first (signal) inputs of the correlators (digital demodulators) 5, 6 and 7, 8, respectively. The second (reference) inputs of the correlators (digital demodulators) 5, 7 and 6, 8 are connected, respectively, to the outputs of the punctual "P" and difference "E-L" (Early-Late) or early "E" of the copy of the SRNS GPS or GLONASS C/A cede of the programmed delay line 16, whose signal input is connected to the output of the C/A code generator generating the SRNS GPS/GLONASS C/A code. The outputs of the correlators (digital demodulators) 5-8 are connected, respectively, to the inputs of the storage units 9-12. Each of the channels 1 of the digital correlator of the prior art device operates as follows. Applied to the signal inputs of the switchboard 2 are two-bit intermediate-frequency signal samples of the SRNS GPS and GLONASS at a sampling rate $F_T$. By a command of the processor, sent to the control register 17 through the data exchange unit 3, the switchboard 2 connects the two-bit SRNS GPS or GLONASS signals to its output. The digital controlled carrier generator 13 provides shaping of the phase values of the IF signals of the preset SRNS GLONASS letter or the SRNS GPS IF signals whose binary code is sent by the processor through the data exchange unit 3 and applies these phase values to the reference input of the digital mixer 4.

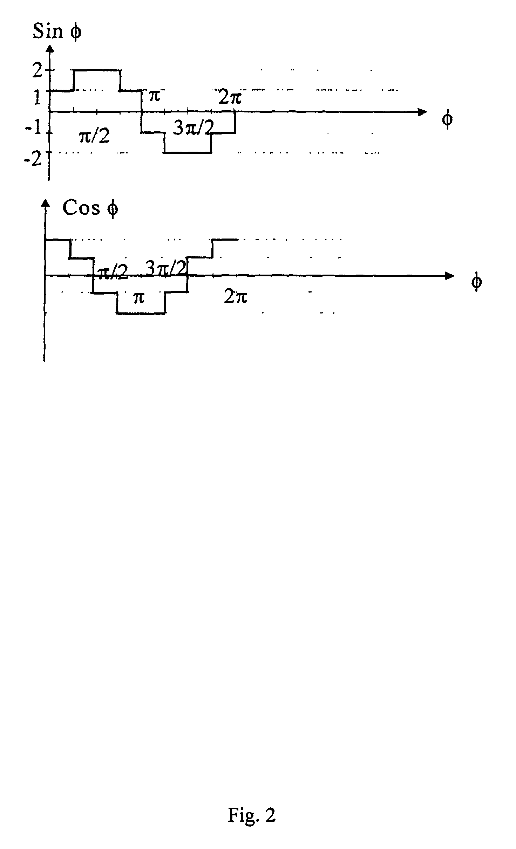

Using the phase values, the digital mixer 4 produces sine and cosine IF signals of a preset letter of the SRNS GLONASS or IF signals of the SRNS GPS, multiplies (mixes) the received two-bit SRNS GPS or GLONASS signals by the generated cosine and sine values, thus recovering the quadrature and in-phase components of the received signal, transfers their spectrum into the fundamental frequency band (on the zero frequency), and applies the frequency multiplication results to its first (quadrature) and second (in-phase) outputs respectively. The correlators (digital demodulators) 5, 7 and 6, 8 correlate the received signals with punctual "P" and difference "E-L" (Early-Late) or early "E" (Early) copies of the reference C/A code of the SRNS GPS or GLONASS respectively. These copies of the code are produced by the programmed delay line 16, which is controlled by the processor (through the data exchange unit 3) and allow the interval between the early and late copies of the C/A code to be varied from 0.1 up to 1.0 of the duration of the character of the C/A code and, therefore, to form a 〈narrow discriminator〉〉〈〈narrow correlator〉〉 in the code tracing system (cf. A.J. Van Dierendonck., Pat. Fenton and Tom Ford "Theory and Performance of Narrow Correlator Spacing in a GPS Receiver", Navigation: Journal of the Institute of Navigation, Vol.39, No.3,1982. [5], USA Patent 5,390,207, cl. G01 S 5/02, H04 B 7/185, published on 14.02.95. (Fenton, A.J. Van Dierendonck, 〈〈Pseudorandom noise ranging receiver which compensates for multipath distortion by dynamically adjusting the time delay spacing between early and late correlators〉〉 [6] and USA patent 5,495,499, cl. H04 L 9/00, published on 27.02.96. (Fenton, A.J. Van Dierendonck, 〈〈Pseudorandom noise ranging receiver which compensates for multipath distortion by dynamically adjusting the time delay spacing between early and late correlators〉〉 [7]). The reference pseudorandom C/A codes of the SRNS GPS or GLONASS satellite signals are produced by the reference C/A code generator 15 fed with a code clock frequency of 1.023 MHz for the GPS or 0.511 MHz for the GLONASS from the output of the digital controlled code generator 14. The selection of the produced pseudorandom code sequence and the code clock frequency values is carried out by the commands of the processor acting on the inputs of these generators through the data exchange unit 3. The results of the correlation of the signals are stored in the storage units 9-12. For the case of operation with the punctual and difference copies of the input signal, the storage unit 9 stores the quadrature correlation component of the punctual copy of the signal Qp, the storage unit 10 stores the quadrature correlation component of the difference copy Qd, the storage unit 11 stores the in-phase component of the punctual copy Ip, the storage unit 12 stores the in-phase component of the difference copy Id. The data accumulated in the storage units 9-12 are periodically read out by the processor through the data exchange unit 3. The processor performs all signal processing algorithms, i.e. the algorithms of searching the signals, tracing the carrier and code, and receiving the service information. The storage period is equal to the period of the C/A code, i.e. 1 ms. Using the signal processing results, the processor controls the operation of each of the channels 1, sending the estimated values of the carrier frequency to the digital controlled carrier generator 13 and sending the code clock frequency to the digital controlled code generator 14. The frequency division of the signals of the different SRNS GLONASS letters and the frequency selection of the GPS signals are provided in the prior art digital correlator due to the joint operation of the digital controlled carrier generator 13, digital mixer 4 and the storage units 9-12. The digital controlled carrier generator 13 forms the phase values of the IF signals of the preset SRNS GLONASS letter or the SRNS GPS IF signals whose binary code is provided by the processor through the data exchange unit 3. The digital mixer 4 forms the cosine and sine values from the phase value and performs multiplication of the two-bit received signal by these quadrature components ("cos" and "sin") of the intermediate-frequency signal, while the storage units 9-12, playing the role of low-pass filters, select the quadrature components of the signal in the fundamental frequency band and suppress the spurious signals during the operation of the digital mixer 4. Since during the digital conversion of the received signals the digital intermediate-frequency signals "sin" and "cos" are used in the digital mixer 4, the quality of the frequency division of the received signals depends on the approximation of the IF values "sin" and "cos" received in the digital mixer 4. In so doing, in order to provide reliable separation of the signals of the different SRNS GLONASS letters whose power can vary in a dynamic range of 25 dB, the level of the spurious harmonic components in the "sin" and "cos" values of the intermediate frequency should not exceed a minus 29-30 dB relative to the power of the fundamental harmonic of the intermediate-frequency signal. This guarantees the absence of reception of the signals of other letters during the reception of the preset letter. The approximation of the sine and cosine of the intermediate frequency known and practically used in the digital correlators of the SRNS GPS and GLONASS integrated receivers is that illustrated in Fig. 2. This approximation is realized, in particular, in the digital correlator "GP2021" of the GEC PLESSEY corporation (cf. GEC PLECCEY Semiconductors, GLOBAL POSITION, Products Handbook, August 1996) [8], whose structure repeats structure of the digital correlator taken as the prior art (Fig.1). For the known approximation of the sine and cosine IF signals, shown in Fig. 2, the results of calculation of the level of the spurious harmonics in the spectrum of these signals are given in Table 1. From Table 1 it is clear that the spectrum of this approximation comprises 7th, 9th, 15th and 17th harmonics, whose levels are lower than that of the fundamental harmonic only by 16, 19, 23.5 and 24.6 dB. Since in the integrated receiver at the wide-band GLONASS signal output of the radio-frequency converter signals of all letters are available simultaneously and their power can differ by 26 dB, the use of the known approximation can result in that the signals of another letter will be received simultaneously with the preset-letter signal on one harmonics of the reference signal synthesized in the digital controlled carrier generator 13. The power of these signals at the output of the digital mixer 4 and storage units 9-12 can happen to be higher than the signal strength of the preset letter. The frequency division of signals accepted in the SRNS GLONASS can be broken resulting in the breakdown of receiver operation.

*Disclosure of the invention*

The technical task to be attained by the claimed invention is the creation of a digital correlator of the receiver of the SRNS signals, providing a reliable frequency division of SRNS GLONASS signals. In this case, the problem consist in that it is necessary to realize such an approximation of the IF sine and cosine that would provide a required level of spurious harmonic components and a simple design of the digital correlator to provide reliable frequency division of the GLONASS signals, i.e. would require a small number of binary digits (bits) for its representation. The essence of the invention consists in a development of a digital correlator for an SRNS signal receiver, comprising N channels, first and second signal inputs, clock inputs whose inputs-outputs are interconnected and form, respectively, first and second signal inputs, a clock input and an input-output of the digital correlator, in which case each of N channels comprises a switchboard to switch the SRNS signals of the systems whose first and second signal inputs form, respectively, first and second signal inputs of a channel, a data exchange unit whose data input-output form an input-output of the channel, a digital mixer whose signal input is connected to the output of the switchboard of the SRNS signals, first and second correlators whose signal inputs are connected to the first output of the digital mixer, third and fourth correlators whose signal inputs are connected to the second output of the digital mixer, first, second, third and fourth storage units, whose signal inputs are connected to the outputs of respective correlators, a digital controlled carrier generator whose output is connected to a reference input of the digital mixer, digital controlled code generator, C/A code generator, a programmed delay line and a control register, in which case the interconnected clock inputs of the storage units, digital controlled carrier generator, digital controlled code generator and programmed delay line form a clock input of the channel, the outputs of the storage units are connected to the inputs of the data exchange unit whose respective outputs are connected to the control input of the digital controlled carrier generator, to the input of the control register, to the first input of the C/A code generator and to the control input of the digital controlled code generator whose output is connected to the second input of the C/A code generator whose output is connected to the programmed delay line signal input, the outputs of the control register are connected to the control input of the switchboard switching the SRNS signals, the control input of the C/A code generator and to the control input of the programmed delay line, the output punctual "P" copy of the C/A code of which is connected to reference inputs of the first and third correlators, while the output of the difference "E-L" or early "E" copy of the C/A code is connected to the reference inputs of the second and fourth correlators. In each of N channels of the digital correlator the digital mixer comprises a converter of a two-bit input signal, the inputs of the first and second digits form a signal input of the digital mixer, a converter to convert the five-bit reference signal, the inputs of the first, second, third, fourth and fifth digits of which form a reference input of the digital mixer, as well as a shaper of a modulus and a sign of the product of the input signal by the carrier cosine, and a shaper of modulus and sign of the product of the input signal by the carrier sine, that is the quadrature and in-phase multipliers whose digital outputs form, respectively, first and second outputs of the digital mixer; the input signal converter is made as a NAND circuit whose first and second inputs are connected to the outputs of first and second inverters and the output is connected to the input of a third inverter; the inputs of the first and second inverters forming inputs of the first and second digits of the input signal converter and the outputs of the first, second, third inverters and the output of the NAND circuit forming, respectively, first, second, third and fourth outputs of the input signal converter; the reference signal converter is made in the form of five channels, in which the first, second, third and fourth channels are made in the form of an exclusive NOR circuit, whose output forms a first output of the channel, and an inverter whose output forms a second output of the channel, both these circuits being connected in series; the fifth channel is made as an inverter and a forward signal path whose outputs form, respectively, a first and a second outputs of this channel, the first inputs of the exclusive NOR circuits create first, second and third channels forming, respectively, the inputs of the first, second and third digits of the reference signal converter; the first input of the exclusive NOR circuit of the fourth channel and the second inputs of the exclusive NOR circuits of the second and third channels connected thereto form an input of the fourth digit of the reference signal converter while the second input of the exclusive NOR circuit of the fourth channel connected to the inputs of the inverter and the channel of the forward signal path of the fifth channel form an input of the fifth digit of the reference signal converter; each of said multipliers (quadrature and in-phase) is made in the form of first, second, third and fourth channels, as well as a fifth (sign) channel whose outputs form outputs of the respective digits of the multipliers; the first and the second channel of each multiplier is made as a NAND circuit whose inputs are connected to the outputs of the first and second OR circuits while the output is connected to the first input of an AND circuit whose output forms an output of the channel; the third and the fourth channel of each multiplier is made as a NOR circuit whose output form an output of the channel while the fifth (sign) channel of each multiplier is made in the form of a NAND circuit whose inputs are connected to the outputs of the first and second OR circuits while the output forms an output of the given channel; the first output of the input signal converter is connected to the first inputs of the first OR circuits of the fifth channels of both multipliers; the second output of the input signal converter is connected to the first inputs of the second OR circuits of the fifth channels of both multipliers, the second inputs of the first and second OR circuits of the fifth channel of the in-phase multiplier being connected, respectively, to the first and second outputs of the fifth channel of the reference signal converter; the second inputs of the first and second OR circuits of the fifth channel of the quadrature multiplier are connected, respectively, to the first and second outputs of the fourth channel of the reference signal converter; the third output of the input signal converter is connected to the first inputs of the NOR circuits of the third and fourth channels of both multipliers; the fourth output of the input signal converter is connected to the second inputs of the AND circuits of the first and second channels of both multipliers; the first output of the first channel of the reference signal converter is connected to the first inputs of the first OR circuits of the first and second channels of the in-phase multiplier and to the first input of the second OR circuit of the first channel of the quadrature multiplier; the second output of the first channel of the reference signal converter is connected to the first input of the second OR circuit of the first channel of the in-phase multiplier and to the first inputs of the first OR circuits of the first and second channels of the quadrature multiplier; the first output of the second channel of the reference signal converter is connected to the second input of the NOR circuit of the third channel, to the first input of the second OR circuit of the second channel of the in-phase multiplier and to the second input of the first OR circuit of the first channel of the quadrature multiplier; the second output of the second channel of the reference signal converter is connected to the second input of the first OR circuit of the first channel of the in-phase multiplier, to the first input of the second OR circuit of the second channel and to the second input of the NOR circuit of the third channel of the quadrature multiplier; the first output of the third channel of the reference signal converter is connected to the second input of the second OR circuit of the second channel, to the second input of the NOR circuit of the fourth channel of the in-phase multiplier, to the second input of the second OR circuit first channel, to the second input of the first OR circuit of the second channel and to the third input of the NOR circuit of the third channel of the quadrature multiplier; the second output of the third channel of the reference signal converter is connected to the second input of the second OR circuit of the first channel, to the second input of the first OR circuit of the second channel, to the third input of the NOR circuit of the third channel of the in-phase multiplier, to the second input of the second OR circuit of the second channel and to the second input of the NOR circuit of the fourth channel of the quadrature multiplier.

*Brief description of the drawings*

The essence of the claimed invention, the possibility of its realization and industrial application are explained by the drawings, as well as by graphs and tables given in the text of the present specification

Fig. 1 illustrates a generalized block diagram of the claimed digital correlator of the SRNS signal receiver and the prior art of this invention, in which:

1 is signal channel input,

- A is the GLONASS signal input,
- B is the GPS signal input,

2 is the switchboard of signals,
3 is the data exchange unit,
4 is the digital mixer,
5, 6, 7 and 8 are the correlators (digital demodulators),
9, 10, 11 and 12 are the storage units,
13 is the digital controlled carrier generator,
14 is the digital controlled code generator,
15 is the C/A code generator,
16 is the programmed delay line,
17 is the control register.

Fig. 2 is a view of the known approximation of the IF sine and cosine;
Fig. 3 is a block diagram of the digital mixer of the claimed digital correlator of the SRNS signal receiver, realizing the new approximation of the IF sine and cosine;
Fig. 4 Illustrates the new approximation of the IF sine and cosine used in the claimed digital correlator of the SRNS signal receiver;

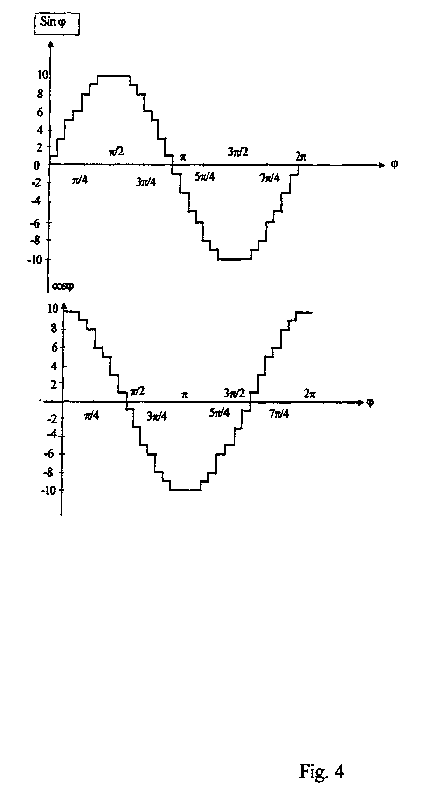

Table 1 shows the values of the levels of spurious harmonic components in the IF signal spectrum, when using the known approximation shown in Fig.2;
Tables 2 to 4 represent the truth diagrams determining the operation of the digital mixer of the claimed digital correlator of the SRNS signal receiver;
Table 5 shows the values of the levels of the spurious harmonic components in the IF signal spectrum, when using the new approximation shown in Fig. 4.

*Preferable embodiments of the invention*

The claimed digital correlator of the SRNS signal receiver comprises (see Fig. 1 and Fig. 4) N channels 1 (11, 12. . 1N). The first and second signal inputs of the channels 1, the clock inputs (inputs of clock signals $F_T$) and the inputs-outputs of all N channels 1 (11, 12... 1N) are interconnected and form, respectively, a first and a second signal inputs, a clock input and an input-output of the digital correlator. Each of the channels 1 of the digital correlator comprises a switchboard 2 for switching the SRNS GPS and GLONASS signals, a data exchange unit 3, a digital mixer 4, and first 5, second 6, third 7 and fourth 8 correlators (digital demodulators), first 9, second 10, third 11 and fourth 12 storage units, a digital controlled carrier generator 13, a digital controlled code generator 14, a C/A code generator 15 (GPS and GLONASS), a programmed delay line 16 and a control register 17. The first and second signal inputs of the switchboard 2 (the inputs of digital SRNS signals of the GPC and GLONASS) form first and second signal inputs of the channel 1 respectively. The input-output of the unit 3 form an input-output of the channel 1. The clock inputs of the storage units 9-12, generators 13, 14 and programmed delay lines 16 (not shown in Fig 1) are connected to each other and form a clock input of the channel 1. The data exchange unit 3 is connected to the processor of the SRNS signal receiver through respective input-output data buses (not shown in Fig.1), as well as to the storage units 9-12, to the control input of the digital controlled carrier generator 13, to control input of the control register 17, to the control input of the digital controlled code generator 14 and to the first input of the C/A code generator 15. The second input of the C/A code generator 15 is connected to the output of the digital controlled code generator 14.

The control input of the switchboard 2 switching the SRNS signals is connected to one of the outputs of the control register 17. The other outputs of the control register 17 are connected to the respective inputs of the programmed delay line 16 and the C/A code generator 15. The output of the switchboard 2 is connected to the signal input of the digital mixer 4 whose reference input is connected to the output of the digital controlled carrier generator 13. The first and second outputs of the digital mixer 4 are connected to the first (signal) inputs of the correlators (digital demodulators) 5, 6 and 7, 8 respectively. The second (reference) inputs of correlators 5, 7 and 6, 8 are connected, respectively, to the outputs of the punctual "P" and difference "E-L" (Early-Late) or early "E" copy of the SRNS GPS or GLONASS C/A code of the programmed delay line 16 whose signal input is connected to the output of the C/A code generator 15 producing the C/A code for the SRNS GPS or GLONASS.

The outputs of the correlators 5, 6, 7, 8 are connected to the inputs of the respective storage units 9, 10, 11, 12. In each of the N channels 1 of the digital correlator the digital mixer 4 comprises (see Fig. 4) inverters 18, 19, 20, 21, 22, 23, 24, 25; exclusive NOR circuits 26, 27, 28, 29; NAND circuits 30, 31, 32, 33, 34, 35, 36; AND circuits 37, 38, 39, 40; NOR circuits 41, 42, 43, 44, as well as OR circuits 45, 46, 47, 48, 49, 50, 51, 52, 63, 54, 55, 56.

In the digital mixer 4 (Fig. 4) the inverters 18-20 and the AND-NOT circuit 30 make up a converter of a two-bit input signal, where the first and second inputs of the AND-NOT circuit 30 are connected to the outputs of the first 18 and second 19 inverters, and the output is connected to the input of the third inverter 20, the inputs of the first 18 and second 19 inverters forming inputs of the first $C(1)$ and second $C(2)$ digits of the input signal converter and the outputs of the first 18, second 19, third 20 inverters and the output of the AND-NOT circuit 30 forming, respectively, first, second, third and fourth outputs of the input signal converter. The inputs of the digits $C(1)$ and $C(2)$ of the input signal converters form a signal input of the digital mixer 4. In the digital mixer 4 (Fig. 4) the inverters 21-25 and the exclusive NOR circuits 26-29 form a five-bit reference signal converter made in the form of five channels. The first channel is made as an exclusive NOR circuit 28, whose output forms a first output of the channel, and an inverter 24 whose output forms a second output of the channel, said elements being connected in series. The second channel consists of an exclusive NOR circuit 27 whose output forms a first output of the channel and an inverter 23 whose output forms the second output of the channel, said elements being connected in series. The third channel consists of an exclusive NOR circuit 26 whose output forms a first output of the channel and an inverter 22 whose output forms a second output of the channel, said elements being connected in series. The fourth channel consists of an exclusive NOR circuit 29 whose output forms a first output of the channel and an inverter 25 whose output forms a second output of the channel, said elements being connected in series. The fifth channel is the made in the form of an inverter 21 and a forward signal path whose outputs form, respectively, first and second outputs of this the channel. The first inputs of the exclusive NOR circuits 28, 27, 26 of the first, second and third channels form, respectively, inputs of the first $F(1)$, second $F(2)$ and third $F(3)$ digits of the reference signal converter. The first input of the exclusive NOR circuit 29 of the fourth channels and the second inputs of the exclusive NOR circuits 28, 27, 26 of the first, second and third channels connected thereto form an input of the fourth digit $F(4)$ of the reference signal converter. The second input of the exclusive NOR circuit 29 of the fourth channels and the inputs connected to the inputs of the inverter 21 and to the forward signal path of the fifth channel form an input of the fifth $F(5)$ digit of the reference signal converter. The inputs of the first $F(1)$, second $F(2)$, third $F(3)$, fourth $F(4)$ and fifth $F(5)$ digits of the reference signal converter form a reference input of the digital mixer 4. In the digital mixer 4 (Fig. 4) of the AND-NOT circuits 34-36, AND circuits 39-40, NOR circuits 43-44 and the OR circuits 52-56 form a shaper of modulus and sign of the product of the input signal multiplied by the carrier sine or «quadrature multiplier». The quadrature multiplier is made in the form of first, second, third and fourth channels, as well as a fifth "sign" channel whose outputs form, respectively, outputs of the four digits COS_M(1), COS_M(2), COS_M(3), COS_M(4) and an output of the fifth sign bit COS_S . The outputs of the digits COS_M(1), COS_M(2), COS_M(3), COS_M(4) and COS_S of the quadrature multiplier form a first output of the digital mixer 4. In the quadrature multiplier the first channel is made in the form of an AND-NOT circuit 36 whose inputs are connected to the outputs of the first 55 and second 56 OR circuits while the output is connected to the first input of the AND circuit whose output forms an output of the channel. The second channel of the quadrature multiplier is made in the form of an AND-NOT circuit 35 whose inputs are connected to the outputs of the first 53 and second 54 OR circuits and output is connected to first input of the AND circuit 39 whose output forms an output of the channel. The third channel of the quadrature multiplier is made in the form of a NOR circuit 44 whose output forms an output of the channel. The fourth channel of the quadrature multiplier is made in the form of a NOR circuit 43 whose output forms an output of the channel. The Fifth (sign) channel of the quadrature multiplier is made in the form of an AND-NOT circuit 34 whose inputs are connected to the outputs of the first 51 and second 52 OR circuits and the output forms an output of the channel. In this case, the first output of the input signal converter (the output of the inverter 18) is connected to the first input of the OR circuit 51 of the fifth channels of the quadrature multiplier, the second output of the input signal converter (output of the inverter 19) is connected to the first input of the OR circuit 52 of the fifth channels of the quadrature multiplier, and the second inputs of the OR circuits 51 and 52 of the fifth channel of the quadrature multiplier are connected, respectively, to the first and second outputs of the fourth channel of the reference signal converter (i.e. to the output of the exclusive NOR circuit 29 and to the output of the inverter 25). The third output of the input signal converter (output of the inverter 20) is connected to the first inputs of the NOR circuits 44 and 43 of the third and fourth channels of the quadrature multiplier. The fourth output of the input signal converter (output of the AND-NOT circuit 30) is connected to the second inputs of the AND circuits 40 and 39 of the first and second channels of the quadrature multiplier. The first output of the first channel of the reference signal converter (output of the exclusive NOR circuit 28) is connected to the first input of the OR circuit 56 of the first channels of the quadrature multiplier. The second output of the first channel of the reference signal converter (output of the inverter 24) is connected to the first inputs of the OR circuits 55 and 53 of the first and second channels of the quadrature multiplier. The first output of the second channel of the reference signal converter (output of the exclusive NOR circuit 27) is connected to the second input of the OR circuit 55 of the first channels of the quadrature multiplier. The second output of the second channel of the reference signal converter (output of the inverter 23) is connected to the first input of the OR circuit 54 of the second channel and to the second input of the NOR circuit 44 of the third channels of the quadrature multiplier. The first output of the third channel of the reference signal converter (output of the exclusive NOR circuit 26) is connected to the second input of the OR circuit 56 of the first channel, to the second input of the OR circuit 53 of the second channels and to the third input of the NOR circuit 44 of the third channels of the quadrature multiplier. The second output of the third channel of the reference signal converter (output of the inverter 22) is connected to the second input of the OR circuit 54 of the second channels and to the second input of the NOR circuit 44 of the fourth channels of the quadrature multiplier. In the digital mixer 4 (Fig. 4) of the AND-NOT circuits 31-33, AND circuits 37-38, NOR circuits 41-42 and OR circuits 45-50 form a shaper of modulus and sign of the product of the input signal multiplied by carrier sine, that is the 〈in-phase multiplier〉. The in-phase multiplier is made in the form of first, second, third and fourth channels, and also in the form of a fifth (sign) channel whose outputs form, respectively, outputs of four digits SIN_M〈1〉, SIN_M〈2〉, SIN_M〈3〉, SIN_M〈4〉 and an output of the fifth sign bit SIN_S. The outputs of the digits SIN_M〈1〉, SIN_M〈2〉, SIN_M〈3〉, SIN_M〈4〉 and SIN_S of the in-phase multiplier form a second output of the digital mixer 4. In the in-phase multiplier the first channel is made in the form of an AND-NOT circuit 33 whose inputs are connected to the outputs of the first 49 and second 50 OR circuits while the output is connected to the first input of the AND circuit 38 whose output forms an output of the channel. The second channel of the in-phase multiplier is made in the form of a NOR circuit 32 whose inputs are connected to the outputs of the first 47 and second 48 OR circuits and the output is connected to the first input of the AND circuit 37 whose output forms an output of the channel. The third channel of the in-phase multiplier is made in the form of a NOR circuit whose output forms an output of the channel. The fourth channel of the in-phase multiplier is made in the form of a NOR circuit 41 whose output forms an output of the channel. The fifth (sign) channel of the in-phase multiplier is made in the form of an AND-NOT circuit 31 whose inputs are connected to the outputs of the first 45 and second 46 OR circuits and the output forms an output of the channel. In so doing the first output of the input signal converter (output of the inverter 18) is connected to the first input of the OR circuit 45 of the fifth channel of the in-phase multiplier, the second output of the input signal converter (output of the inverter 19) is connected to the first input of the OR circuit 46 of the fifth channel of the in-phase multiplier, and the second inputs of the OR circuits 45 and 46 of the fifth channels of the in-phase multiplier are connected, respectively, to the first and second outputs of the fifth channel of the reference signal converter (i.e. to the output of the inverter 21 and to the output of the forward signal path). The third output of the input signal converter (output of the inverter 20) is connected to the first inputs of the NOR circuits 42 and 41 of the third and fourth channels of the in-phase multiplier. The fourth output of the input signal converter (output of the AND-NOT circuit 30) is connected to the second inputs of the AND circuits 38 and 37 of the first and second channels of the in-phase multiplier. The first output of the first channel of the reference signal converter (output of the exclusive NOR circuit 28) is connected to the first inputs of the OR circuits 49 and 47 of the first and second channels of the in-phase multiplier.

The second output of the first channel of the reference signal converter (output of the inverter 24) is connected to the first input of the OR circuit 50 of the first channel of the in-phase multiplier. The first output of the second channel of the reference signal converter (output of the exclusive NOR circuit 27) is connected to the second input of the NOR circuits 42 of the third channel and to the first input of the OR circuits 48 of the second channels of the in-phase multiplier. The second output of the second channel of the reference signal converter (output of the inverter 23) is connected to the second input of the OR circuits 49 of the first channel of the in-phase multiplier. The first output of the third channel of the reference signal converter (output of the exclusive NOR circuit 26) is connected to the second input of the OR circuits 48 of the second channel and to the second input of the NOR circuits 41 of the fourth channels of the in-phase multiplier. The second output of the third channel of the reference signal converter (output of the inverter 22) is connected to the second input of the OR circuit 50 of the first channel, to the second input of the OR circuit 47 of the second channel and to the third input of the NOR circuits 42 of the third channel of the in-phase multiplier. The operation of the claimed digital correlator of the SRNS signal receiver is similar to the operation of the prior-art digital correlator discussed above. Thus, in each of the channels 1 of the digital correlator the signal inputs of the switchboard 2 receive two-bit samplings of the IF SRNS GPS and GLONASS signals, respectively, at a sampling rate of $F_T$. By a command from the processor (not shown in the drawings) sent to the control register 17 through the data exchange unit 3, the switchboard 2 transfers the two-bit SRNS GPS or GLONASS signals to its output. Under the effect of the control signals from the processor passing through the data exchange unit 3, the digital controlled carrier generator 13 shapes the phase of the IF signals of a preset SRNS GLONASS letter or IF SRNS GPS signals in the form of a binary five-bit code and applies these signals to the reference five-bit input of the digital mixer 4. The digital mixer 4 uses the phase values to form the sine and cosine IF signals of the preset SRNS GLONASS letter or of the SRNS GPS IF signals. Then the digital mixer 4 multiplies (mixes) the received two-bit SRNS GPS or GLONASS signals acting on its signal input by the produced cosine and sine values to recover the quadrature and in-phase components of the received signal to allow their spectrum to be fed to the fundamental frequency band (on the zero frequency) and transfers the multiplication results (together with the product sign) to its first (quadrature) and second (in-phase) outputs, respectively, in the form of a five-bit binary code, where the fifth digit carries the information on the sign. The correlators (digital demodulators) 5, 7 and 6, 8 perform the correlation of the received signals with punctual "P" and difference "E-L" (Early-Late) or early "E" copies of the reference C/A code of the SRNS GPS or GLONASS respectively. These copies of the code are produced by the programmed delay line 16 which under the control of the processor (through the data exchange unit 3) allows the interval between the early and late copies of the C/A code to be varied from 0.1 to 1 duration of the character of the C/A code and, therefore, to form a ⟨narrow discriminator⟩ ⟨⟨narrow correlator⟩⟩ in the code tracing system [5,6,7]. The reference pseudorandom C/A codes of the signals of the SRNS GPS or GLONASS satellites are produced by the generator 15 of the reference C/A code using the code clock frequency of 1.023 MHz for the GPS or of 0.511 MHz for the GLONASS supplied from the output of the digital controlled code generator 14. The choice of type of the generated pseudorandom code sequence and the values of code clock frequency are carried out by the processor commands acting on inputs of these generators through the data exchange unit 3. The signal correlation results are stored in the storage units 9-12. For the case of operation with punctual and difference copies of the input signal the storage unit 9 stores the quadrature component of the correlation of the punctual copy of the signal Qp, the storage unit 10 stores the quadrature component of the correlation of the difference copy Qd, the storage unit 11 stores the in-phase component of the punctual copy Ip, and the storage unit 12 stores the in-phase component of the difference copy Id.

The storage units 9-12, also playing the role of low-pass filters, select the quadrature components of the signal on the fundamental frequency band and suppress the by-products of the operation of the digital mixer 4. The data stored in the storage units 9-12 are periodically read out through the data exchange unit 3 by the processor, in which all algorithms of signal processing, i.e. algorithms of searching the signals, tracing the carrier and code, reception of a service information are realized. The storage period is equal to the period of the C/A code, i.e. 1 ms. Using the signal processing results, the processor controls the operation of each of the channels 1, sending the estimated values of the carrier frequency to the digital controlled carrier generator 13 and the code clock frequency to the digital controlled code generator 14. The necessary frequency division of the signals of the different SRNS GLONAS letters and frequency selection of the GPS signal is provided in the digital correlator due to the joint operation of the digital controlled carrier generator 13, digital mixer 4 and storage units 9-12. Since during the digital conversion of the received signals in the digital mixer 4 use is made of the "sin" and "cos" digital IF signals, the quality of the frequency division of the received signals depends on the approximation of the "sin" and "cos" values received in the digital mixer 4. In so doing, as mentioned above, to provide reliable separation of the SRNS GLONASS signals of different letters whose power can vary in a dynamic range within 25 dB, the level of the spurious harmonic components in the "sin" and "cos" values of the intermediate frequency should not exceed minus 29-30 dB with respect to the power of the fundamental harmonic of the IF signal. This provision guarantees the absence of signals of other letters during the reception of the preset letter. In the claimed digital correlator the required separation of signals is provided using a new form of approximation of the "sin" and "cos" values of the intermediate frequency shown in Fig.5 and realized by the binary five-bit code processed by the digital mixer of the offered structure shown in Fig. 4. The digital mixer of the claimed digital correlator operates, respectively, with the following logic expressions realizing the truth tables (Tabs. 2-4):

$$\cos\_s = C\langle 1\rangle \bullet (F\langle 5\rangle \bullet /F\langle 4\rangle + /F\langle 5\rangle \bullet F\langle 4\rangle) + C\langle 2\rangle \bullet (F\langle 4\rangle \bullet F\langle 5\rangle + /F\langle 4\rangle /F\langle 5\rangle)$$

$$\cos\_m\langle 4\rangle = / [/(C\langle 1\rangle + C\langle 2\rangle) + /(F\langle 3\rangle \bullet F\langle 4\rangle + /F\langle 3\rangle \bullet /F\langle 4\rangle)] =$$
$$= (C\langle 1\rangle + C\langle 2\rangle) \bullet (F\langle 3\rangle \bullet F\langle 4\rangle + /F\langle 3\rangle \bullet /F\langle 4\rangle)$$

$$\cos\_m<3> = /[/(C\langle 1\rangle + C\langle 2\rangle) + (F\langle 3\rangle \bullet /\langle 4\rangle + /F\langle 3\rangle \bullet /F\langle 4\rangle) + + /(F\langle 2\rangle \bullet F\langle 4\rangle + /F\langle 2\rangle \bullet /F\langle 4\rangle)] =$$
$$= (C\langle 1\rangle + C\langle 2\rangle) \bullet /(F\langle 3\rangle \bullet F\langle 4\rangle + /F\langle 3\rangle \bullet /F\langle 4\rangle) \bullet \; \bullet (F\langle 2\rangle \bullet F\langle 4\rangle + /F\langle 2\rangle \bullet /F\langle 4\rangle) =$$
$$= (C\langle 1\rangle + C\langle 2\rangle) \bullet (/F\langle 4\rangle \bullet /F\langle 2\rangle \bullet F\langle 3\rangle + F\langle 4\rangle \bullet F\langle 2\rangle \bullet /F\langle 3\rangle)$$

$$\cos\_m\langle 2\rangle = (C\langle 1\rangle + C\langle 2\rangle) \bullet /\{[(F\langle 3\rangle \bullet F\langle 4\rangle + /F\langle 3\rangle \bullet /F\langle 4\rangle)$$
$$+ /(F\langle 1\rangle \bullet F\langle 4\rangle + /F\langle 1\rangle \bullet /F\langle 4\rangle)] \bullet [/(F\langle 3\rangle \bullet F\langle 4\rangle + /F\langle 3\rangle \bullet /F\langle 4\rangle) + /(F\langle 2\rangle \bullet F\langle 4\rangle$$
$$+ /F\langle 2\rangle \bullet /F\langle 4\rangle)]\} = (C\langle 1\rangle + C\langle 2\rangle) \bullet (F\langle 4\rangle \bullet /F\langle 3\rangle \bullet F\langle 1\rangle + /F\langle 4\rangle \bullet F\langle 3\rangle \bullet /F\langle 1\rangle + F\langle 4\rangle \bullet F\langle 3\rangle \bullet F\langle 2\rangle + /F\langle 4\rangle \bullet /F\langle 3\rangle \bullet /F\langle 2\rangle)$$

$$\cos\_m\langle 1\rangle = (C\langle 1\rangle + C\langle 2\rangle) \bullet /\{[/(F\langle 1\rangle \bullet F\langle 4\rangle + /F\langle 1\rangle \bullet /F\langle 4\rangle + (F\langle 2\rangle \bullet F\langle 4\rangle$$
$$+ /F\langle 2\rangle \bullet /F\langle 4\rangle)] \bullet [(F\langle 1\rangle \bullet F\langle 4\rangle + /F\langle 1\rangle \bullet /F\langle 4\rangle) + (F\langle 3\rangle \bullet F\langle 4\rangle +$$
$$/F\langle 3\rangle \bullet /F\langle 4\rangle)]\} = (C\langle 1\rangle + C\langle 2\rangle) \bullet (/F\langle 4\rangle \bullet F\langle 2\rangle \bullet /F\langle 1\rangle + F\langle 4\rangle \bullet /F\langle 2\rangle \bullet F\langle 1\rangle + F\langle 4\rangle \bullet F\langle 3\rangle \bullet F\langle 1\rangle + F\langle 4\rangle \bullet /F\langle 3\rangle \bullet /F\langle 1\rangle)$$

$$sin\text{-}s = C(1) \cdot F(5) + C(2) \cdot /F(5)$$

$$sin\_m(4) = /[/(C(1) + C(2)) + (F(3) \cdot F(4)) + /F(3) \cdot /F(4))] = (C(1) + C(2)) \cdot (F(3) \cdot /F(4)) + /F(3) \cdot F(4))$$

$$sin\_m(3) = /[/(C(1) + C(2)) + (F(3) \cdot /F(4)) + /F(3) \cdot F(4)) +$$
$$(F(2) \cdot F(4)) + /F(2) \cdot /F(4))] = (C(1) + C(2)) \cdot (F(3) \cdot F(4)) + /F(3) \cdot /F(4)) \cdot (F(2) \cdot /F(4) + /F(2) \cdot F(4))$$

$$sin\_m(2) = (C(1) + C(2)) \cdot /\{[/(F(3) \cdot F(4)) + /F(3) \cdot /F(4)) + (F(1) \cdot F(4))$$
$$+ /F(1) \cdot /F(4))] \cdot [(F(3) \cdot F(4)) + /F(3) \cdot /F(4)) + (F(2) \cdot F(4)) +$$
$$/F(2) \cdot /F(4))]\} = (C(1) + C(2)) \cdot (/F(4) \cdot /F(3) \cdot F(1) + F(4) \cdot F(3) \cdot /F(1) + /F(4) \cdot F(3) \cdot F(2) + F(4) \cdot /F(3) \cdot /F(2))$$

$$sin\_m(1) = (C(1) + C(2)) \cdot /\{[(F(1) \cdot F(4)) + /F(1) \cdot /F(4)) + /(F(2) \cdot F(4))$$
$$+ /F(2) \cdot /F(4))] \cdot [/(F(1) \cdot F(4)) + /F(1) \cdot /F(4)) + /(F(3) \cdot F(4)) + /F(3) \cdot /F(4))]\} =$$
$$= (C(1) + C(2)) \cdot (F(4) \cdot F(2) \cdot /F(1) + /F(4) \cdot /F(2) \cdot F(1) + F(4) \cdot F(3) \cdot F(1) + /F(4) \cdot /F(3) \cdot /F(1))$$

In these expressions the digit "/" means negation, digit " • " is the conjunction, digit "+" is the disjunction.

Table 2 usually represents the encoding of the three-level signal at the output of the radio-frequency analog-to-digital converter by a two-bit digital signal usually used in the integrated receiver of the SRNS GPS and GLONASS systems. Table 3 is a truth table of the digital mixer 4 of the claimed digital correlator describing the law of shaping the modules of the products of the input signal by the sine and cosine of the carrier frequency providing the claimed type of their approximation shown in Fig.4. Table 4 presents a truth table of the digital mixer of the claimed digital correlator describing the law of shaping the signs of the products of the input signal by the sine and cosine of the carrier frequency. The operation of the digital mixer 4 in accordance with the above expressions provides a low level of spurious harmonic components and, therefore, a reliable frequency division of signals of various SRNS GLONASS letters. The results of the calculation of the level of the spurious harmonic components for the approximation used in the claimed digital correlator are presented in Table 5. From Table 5 it is clear that for the sine and cosine approximation of the IF signal synthesized by the digital controlled carrier generator 13 and used in the claimed digital correlator, the level of the spurious harmonic components does not exceed minus 29.827 dB of the fundamental harmonic level. This guarantees reliable frequency division of the signals of various letters in the SRNS GLONASS system even if the power of the signal of any letter, having a frequency coinciding with the frequency of one of the harmonics of the preset letter signal, will exceed the power of the preset signal by 26 dB.

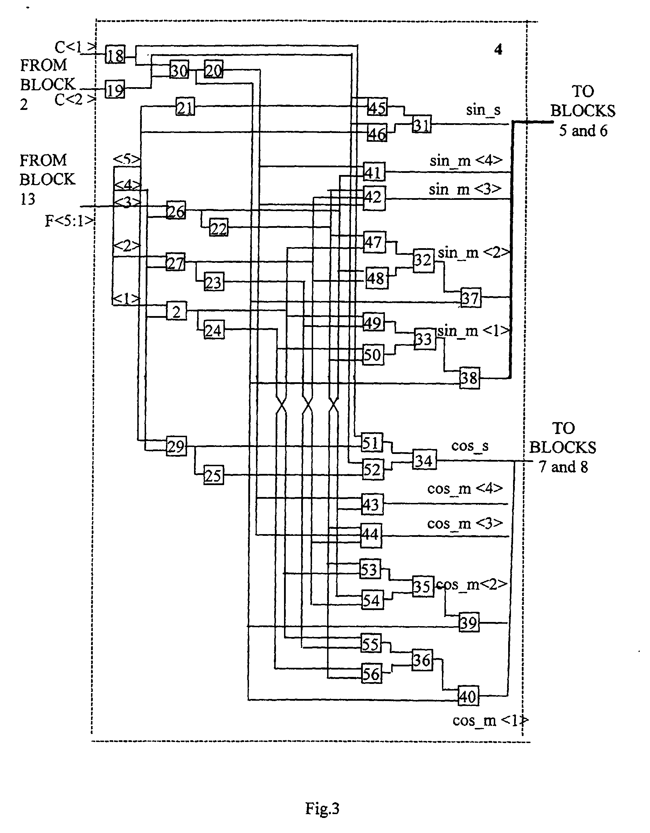

In this case, the sine and cosine values at this approximation can be represented by only 5 binary digits, therefore, the realization of the digital mixers 4 in the channels 1 of the digital correlator does not require large expenses for updating the equipment, and this is illustrated by the diagram presented in Fig. 3.

*Industrial applicability*

From what is considered above it is the clear, that the claimed invention is realizable, industrially applicable, solves the formulated technical problem and is very promising, when used in the equipment operating simultaneously with the SRNS GPS and GLONASS signals providing reliable frequency separation of the SRNS GLONASS signals by means of simple digital correlator units.

TABLE 1

| Harmonic number | Harmonic level relative to the fundamental harmonic level, dB |
|:---:|:---:|
| 3 | -24,853 |
| 5 | -29,29 |
| 7 | -16,901 |
| 9 | -19,085 |
| 11 | -36,138 |

TABLE 1 (continued)

| Harmonic number | Harmonic level relative to the fundamental harmonic level, dB |
|---|---|
| 13 | -37,59 |
| 15 | -23,521 |
| 17 | -24,609 |
| 19 | -40,885 |
| 21 | -41,757 |
| 23 | -27,234 |
| 25 | -27,959 |
| 27 | -43,937 |
| 29 | -44,561 |
| 31 | -29,826 |
| 33 | -30,371 |
| 35 | -46,,191 |
| 37 | -46,677 |
| 39 | -31,821 |
| 41 | -32,256 |
| 43 | -47,978 |
| 45 | -48,378 |
| 47 | -33,442 |
| 49 | -33,804 |
| 51 | -49,460 |

TABLE 2

| Encoding the readings of the two-bit input signal | | |
|---|---|---|
| Input signal value | Value of the first digit $C_{(1)}$ | Value of the second digit $C_{(2)}$ |
| 0 | 0 | 0 |
| +1 | 1 | 0 |
| -1 | 0 | 1 |

## TABLE 3

The truth diagram for forming the modules of products of the input signal by the sine and cosine of the carrier at  C<1> =1 or C<2>=1

| Carrier phase | | | modulus cos_m<4:1> <br><br> modulus sin_m<4:1> | |
|---|---|---|---|---|
| digit F<3> | digit F<2> | digit F<1> | quadrant number <br> for sin:1,3 | quadrant number <br> for sin:2,4 |

|  |  |  | for cos:2,4 | for cos:1,3 |
|---|---|---|---|---|
| 0 | 0 | 0 | 0001 | 1010 |
| 0 | 0 | 1 | 0011 | 1010 |
| 0 | 1 | 0 | 0101 | 1001 |
| 0 | 1 | 1 | 0110 | 1000 |
| 1 | 0 | 0 | 1000 | 0110 |
| 1 | 0 | 1 | 1001 | 0101 |
| 1 | 1 | 0 | 1010 | 0011 |
| 1 | 1 | 1 | 1010 | 0001 |

\* the quadrant number is determined by the values of the fourth and fifth digits of the carrier phase

$F<5>F<4> = 00$ - the first quadrant

$F<5>F<4> = 01$ - the second quadrant;

$F<5>F<4> = 10$ - the third quadrant;

$F<5>F<4> = 11$ - the fourth quadrant;

TABLE 4

The truth diagram for forming the modules of products of the input signal by the sine and cosine of the carrier

| the first digit of the signal $C<1>$ | the second digit of the signal $C<2>$ | sign cos_s sign sin_s | |
|---|---|---|---|
|  |  | the quadrant | the quadrant |

| | | number for sin:1,2 for cos:1,4 | number for sin:3,4 for cos:2,3 |
|---|---|---|---|
| 0 | 0 | 0 | 0 |
| 0 | 1 | 1 | 0 |
| 1 | 0 | 0 | 1 |
| 1 | 1 | forbidden | |

TABLE 5

| The table of the levels of the spurious harmonic components in the spectrum of the intermediate-frequency signals, when using the new approximation shown in Fig. 4 | |
|---|---|
| Harmonic number | The harmonic level relative to the fundamental harmonic level, dB |
| 3 | -48,939 |
| 5 | -55,162 |
| 7 | -36,370 |
| 9 | -43,473 |
| 11 | -43,597 |
| 13 | -39,829 |
| 15 | -39,324 |
| 17 | -40,411 |
| 19 | -43,125 |
| 21 | -49,213 |
| 23 | -51,623 |
| 25 | -47,426 |
| 27 | -69,822 |
| 29 | -68,663 |
| 31 | -29,827 |
| 33 | -30,371 |
| 35 | -70,261 |

TABLE 5 (continued)

| The table of the levels of the spurious harmonic components in the spectrum of the intermediate-frequency signals, when using the new approximation shown in Fig. 4 | |
| --- | --- |
| Harmonic number | The harmonic level relative to the fundamental harmonic level, dB |
| 37 | -72,534 |
| 39 | -51,290 |
| 41 | -56,643 |
| 43 | -55,438 |
| 45 | -50,615 |
| 47 | -49,243 |
| 49 | -49,607 |
| 51 | -51,701 |

Claims

1. A digital correlator intended for use in the receiver of signals of satellite radio navigation systems comprising N channels whose first and second signal inputs, as well as the clock inputs and the inputs-outputs of N channels are interconnected and make up, respectively, first and second signal inputs, a clock input and an input-output of the digital correlator, each of N channels comprises a switchboard to switch the signals of the satellite radio navigation systems, the first and second signal inputs of said switchboard forming, respectively, first and second signal inputs of the channel, a data exchange unit whose data input-output forms an input-output of the channel, a digital mixer whose signal input is connected to the output of the switchboard switching the signals of the satellite radio navigation systems, first and second correlators whose signal inputs are connected to the first output of the digital mixer, third and fourth correlators whose signal inputs are connected to the second output of the digital mixer, first, second, third and fourth storage units whose signal inputs are connected to the outputs of the respective correlators, a digital controlled carrier generator whose output is connected to the reference input of a digital mixer, a digital controlled code generator, a C/A code generator, a programmed delay line and a control register, the interconnected clock inputs of the storage units, digital controlled carrier generator, digital controlled code generator and programmed delay line forming a clock input of the channel, the outputs of the storage units are connected to the inputs of the data exchange unit whose appropriate outputs are connected to the control input of the digital controlled carrier generator, to the input of the control register, to the first input of the C/A code generator and to the control input of the digital controlled code generator whose output is connected to the second input of the C/A code generator whose output is connected to the signal input of the programmed delay line, the outputs of the control register are connected to the control input of the switchboard switching the signals of the satellite radio navigation systems, to the control input of the C/A code generator and to the control input of the programmed delay line whose output of the punctual "P" copy of the C/A code is connected to the reference inputs of the first and third correlators and the output of the difference "E-L" or early "E" copy of the C/A code is connected to the reference inputs of the second and fourth correlators, *characterized in that* in each of the N channels of the digital correlator the digital mixer comprises a two-bit input signal converter, the inputs of the first and second bits of which form a signal input of the digital mixer, a five-bit reference signal converter, the inputs of the first, second, third, fourth and fifth bits of which form a reference input of the digital mixer, a shaper of modulus and sign of the product of the input signal multiplied by the carrier cosine and a shaper of modulus and sign of the product of the input signal multiplied by the carrier sine: the quadrature and in-phase multipliers, respectively, the outputs of the multipliers forming, respectively, first and second outputs of the digital mixer.

2. The digital correlator according to Claim 1, *characterized in that* the input signal converter is made in the form of an AND-NOT circuit whose first and second inputs are connected to the outputs of the first and second inverters and whose output is connected to the input of a third inverter, the inputs of the first and second inverters forming inputs of the first and second bits of the input signal converter while the outputs of the first, second and third inverters and the output of the AND-NOT circuit forming, respectively, first, second, third and fourth outputs of the input signal converter, the reference signal converter consists of five channels, of which the first, second, third and fourth channels make up a series circuit including an exclusive OR circuit whose output forms a first output of the channel and an inverter whose output forms a second output of the channel while the fifth channel is made as an inverter and a forward signal path whose outputs form, respectively, first and second outputs of this channel; the first inputs of the exclusive NOR circuits of the first, second and third channels forming, respectively, the inputs of the first, second and third bits of the reference signal converter; the first input of the exclusive NOR circuit of the fourth channel and the associated second inputs of the exclusive NOR circuits of the first, second and third channels forming an input of the fourth bit of the reference signal converter, and second input of the exclusive NOR circuit of the fourth channel and the associated inputs of the inverter and forward signal path of the fifth channel forming an input of the fifth bit of the reference signal converter; each of said multipliers (quadrature and in-phase) is made in the form of first, second, third and fourth channels, as well as a fifth (sign) channel whose outputs form outputs of the corresponding bits of the multipliers; the first and second channel of each of the multipliers is made in the form of an AND-NOT circuit whose inputs are connected to the outputs of the first and second OR circuits and whose output is connected to the first input of an AND circuit whose output forms an output of the channel; the third and fourth channel of each of the multipliers is made in the form of a NOR circuit whose output forms an output of the channel, and the fifth (sign) channel of each of the multipliers is made in the form of an AND-NOT circuit whose inputs are connected to the outputs of the first and second OR circuits while the output forms an output of the given channel, the first output of the input signal converter being connected to the first inputs of the first OR circuits of the fifth channels of both multipliers; the second output of the input signal converter is connected to the first inputs of the second OR circuits of the fifth channels of both multipliers; the second inputs of the first and second OR circuits of the fifth channel of the in-phase multiplier are connected, respectively, to the first and second outputs of the fifth channel of the reference signal converter; the second inputs of the first and second OR circuits of the fifth channel of the quadrature multiplier are connected, respectively, to the first and second outputs of the fourth channel of the reference signal converter; the third output of the input signal converter is connected to the first inputs of the NOR circuits of the third and fourth channels of both multipliers; the fourth output of the input signal converter is connected to the second inputs of the AND circuits of the first and second channels of both multipliers; the first output of the first channel of the reference signal converter is connected to the first inputs of the first OR circuits of the first and second channels of the in-phase multiplier and to the first input of the second OR circuit of the first channel of the quadrature multiplier; the second output of the first channel of the reference signal converter is connected to the first input of the second OR circuit of the first channel of the in-phase multiplier and to the first inputs of the first OR circuits of the first and second channels of the quadrature multiplier; the first output of the second channel of the reference signal converter is connected to the second input of the NOR circuit of the third channel and to the first input of the second OR circuit of the second channel of the in-phase multiplier and also to the second input of the first OR circuit of the first channel of the quadrature multiplier; the second output of the second channel of the reference signal converter is connected to the second input of the first OR circuit of the first channel of the in-phase multiplier, to the first input of the second OR circuit of the second channel and to the second input of the NOR circuit of the third channel of the quadrature multiplier; the first output of the third channel of the reference signal converter is connected to the second input of the second OR circuit of the second channel and to the second input of the NOR circuit of the fourth channel of the in-phase multiplier, to the second input of the second OR circuit of the first channel, to the second input of the first OR circuit of the second channel and to the third input of the NOR circuit of the third channel of the quadrature multiplier; the second output of the third channel of the reference signal converter is connected to the second input of the second OR circuit of the first channel, to the second input of the first OR circuit of the second channel, to the third input of the NOR circuit of the third channel of the in-phase multiplier, to the second input of the second OR circuit of the second channel and to the second input of the NOR circuit of the fourth channel of the quadrature multiplier.

Fig. 1

Fig. 2

Fig.3

Fig. 4

<div align="center">

**INTERNATIONAL SEARCH REPORT**

</div>

| | International application No |
|---|---|
| | PCT / RU 98/ 00422 |

**A. CLASSIFICATION OF SUBJECT MATTER[6]:**
IPC 7: G01S 5/02, H04B 7/185

According to International Patent Classification (IPC) or to both national classification and IPC6

**B. FIELDS SEARCHED**

Minimum documentation searched (classification system followed by classification symbols)
IPC 7: G01S 5/02, 5/06, 5/12, 5/14, 1/30, H04B 7/185

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate. of the relevant passages | Relevant to claim No. |
|---|---|---|
| A | US 5390207 A (NOVATEL COMMUNICATIONS LTD); 14 February 1995 (14.02.95) | 1-2 |
| A | US 5808582 A (LITTON CONSULTING GROUP, INC.); 15 September 1998 (15.09.98) | 1-2 |
| A | RU 2090902 C1 (TOVARISCHESTVO SOGRACHINNOI OTVETSTVENNOSTJU NAUCHNO-PROIZVODSTVENNOE PREDPRYATIE "RUSKOM" ); 20 September 1997 (20.09.97) | 1-2 |
| A | US 5689271 A (TRIMBLE NAVIGATION LIMITED); 18 November 1997 (18.11.97) | 1-2 |
| A | EP 0508621 A1 (ASHTECH INC); 14 October 1992 (14.10.92) | 1-2 |

☐ Further documents are listed in the continuation of Box C.  ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 15 September 1999 (15.09.99) | 30 September 1999 (30.09.99) |

| Name and mailing address of the ISA/ <br><br> RU <br> Facsimile No. | Authorized officer <br><br><br> Telephone No. |
|---|---|

Form PCT/ISA/210 (second sheet) (July 1992)